Europäisches Patentamt

European Patent Office

Office européen des brevets

(11) Publication number: **0 193 371 B1**

# EUROPEAN PATENT SPECIFICATION

(45) Date of publication of patent specification: **16.10.91**  (51) Int. Cl.⁵: **A21C 15/00**

(21) Application number: **86301308.2**

(22) Date of filing: **24.02.86**

(54) **A method of producing bread containing filling material.**

(30) Priority: **24.02.85 JP 34847/85**

(43) Date of publication of application:
**03.09.86 Bulletin 86/36**

(45) Publication of the grant of the patent:
**16.10.91 Bulletin 91/42**

(84) Designated Contracting States:
**AT BE CH DE FR GB IT LI NL SE**

(56) References cited:
**DE-C- 420 971**
**FR-A- 818 996**
**US-A- 1 679 660**
**US-A- 2 051 682**
**US-A- 2 383 774**

(73) Proprietor: **RHEON AUTOMATIC MACHINERY CO. LTD.**
**2-3, Nozawa-machi**
**Utsunomiya-shi Tochigi-ken(JP)**

(72) Inventor: **Hayashi, Torahiko**
**3-4, Nozawa-machi**
**Utsunomiya-shi Tochigi-ken(JP)**

(74) Representative: **Leale, Robin George et al**
**FRANK B. DEHN & CO. Imperial House 15-19**
**Kingsway**
**London WC2B 6UZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of producing bread containing filling material, and more particularly to a method of introducing into baked bread filling material consisting either of fluid food and solid food or only of solid food. A primary object of the invention is to provide a method of introducing filling material into baked bread without cutting or damaging the shape of the bread and without clogging the tip of a pipe which is used to insert the filling material into the bread.

Combinations of bread and a filling material such as salad, in the form of sandwiches or hamburgers, have hitherto been produced by placing the filling material between two slices of bread or by placing such material on a cut portion of bread. However, filling material thus introduced tends to be forced out of the bread by the pressure of the teeth of a person eating such a hamburger or sandwich.

A method has been proposed in which a pipe is used to insert the filling material into the bread. However, this method does not permit a large amount of fluid material to be received in the bread, and furthermore the tip of the pipe is liable to be clogged by crumbs. Also, filling material containing comparatively large pieces of solid food could not be smoothly introduced into the bread, and was liable to overflow from the bore created by the pipe, and to break the bread if a large-sized pipe was used.

The production of filling-containing bread by the insertion of a pipe into the bread has accordingly been limited to the use of a narrow nozzle through which only a fluid filling material is injected into the bread.

US-A-2,383744 discloses a method of producing rolls where a dough sheet is rolled up and cut to form suitably sized rolls.

FR-A-818996 discloses a method of producing bread containing filling material, comprising the steps of producing bread from dough, inserting a pipe into said bread to make a bore along an axis of said bread and introducing filling material containing solid food into said bore of said bread through said pipe to thereby produce bread containing filling material.

The present invention is characterised by producing said bread by forming a laminated dough sheet including a plurality of layers of fats and oils between layers of dough, cutting said dough sheet to desired dimensions, winding up said cut dough sheet, and baking the wound sheet to thereby produce bread inside which a plurality of cavities are disposed in a spiral form about said axis.

Thus, in a preferred form of the present invention, first a desired shape of baked bread is prepared by forming a sheet of dough including layers of fats and oils, cutting the sheet, winding it up, and baking it. A pipe is then introduced into the bread along the axis thereof. Inside the bread, a plurality of substantially flat cavities are formed extending around the axis thereof, which cavities are caused by the expansion of gaseous materials between the thin films of fats and oils when baking the wound dough sheet, or even when fermentation is taking place.

A filling material, such as pieces of cucumber, carrot, onion, grapes, strawberries, pieces of ham, or cooked and diced meat, for example, is then injected through the pipe. The filling material is thus introduced into the said cavities. The bread keeps its original shape even when a large amount of filling material is introduced into it, as the pressure due to the injected filling material is absorbed by the flexible layers comprising holes and thin films. This method of filling enables sanitary conditions to be maintained for storage and transportation, as the filling material is introduced without cutting the baked bread.

An embodiment of the invention will now be described by way of example and with reference to the accompanying drawing, whose single Figure illustrates a bar-like bread body 1 wound from a dough sheet having layers therein.

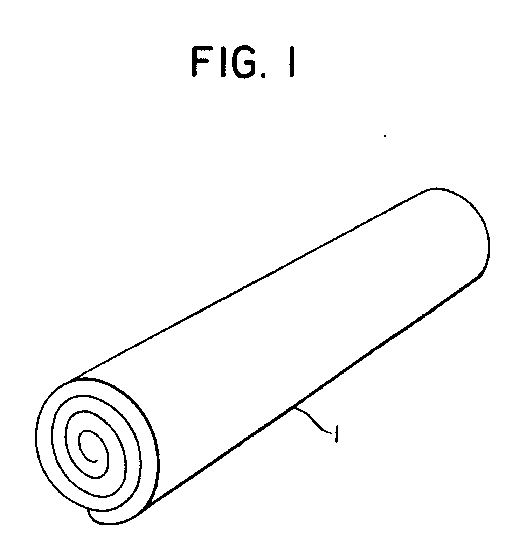

In this embodiment, bread dough with which yeast is blended, and containing fats and oils, is laminated to make parallel layers in which thin films of dough and thin films of fats and oils are alternately laid so as to make a flat sheet of dough. The flat sheet is then cut into a desired shape, for instance circular, hexagonal, square, or triangular, and the cut pieces of dough are wound up from one end thereof to form a bar-like body 1 as shown in Fig. 1. The body 1 is then aged in a proofer at 40°C to 50°C and baked in an oven.

A spiral arrangement of cavities is thereby formed about the axis of the bread, particularly when the ratio of the fats and oils to the bread dough is 1:4 or more. The baked dough becomes a flexible material in which a spiral arrangement of cavities is formed, and has elasticity in the radial and outward direction around the axis of the bread. A large number of cavities are formed by carbon dioxide produced by the fermentation of the yeast in the dough sheet between the layers of fats and oils, even before the bar-like body is baked, and the cavity formation is further promoted by baking the bar-like body.

Such a spiral arrangement of cavities can be produced in the bread even when yeast is not blended in the dough, because air bubbles finely dispersed in the dough sheet expand to form a spiral arrangement of cavities. The taste of the bread with and without yeast of course differs, but in both types of bread cavities are formed and provide both flexibility and radial elasticity outwardly around the axis of the spiral.

A method of introducing filling material into the spiral arrangement of cavities will now be described. A nozzle is inserted into the bread along the central longitudinal axis thereof. Because the nozzle is advanced along the axis of the spiral, the bread is not broken by the insertion of the nozzle, or even the introduction of a large amount of filling material. The nozzle is retracted while extruding the filling material, whereby the material can be introduced into the cavities within the bread.

Although the inner diameter of the nozzle depends of course on the size of the solid pieces in the filling material, the flexibility or elasticity in the radial direction, outwardly around the axis of the bread, permits the insertion of a relatively large size of nozzle, and also causes the bore formed by the insertion of the nozzle to shrink somewhat when the nozzle is removed. On the other hand a bore formed, for example, in the side wall of bread, by insertion of the nozzle in a direction perpendicular to the axis of the bread, does not so shrink.

Further, since a large number of cavities receive the filling material, and the aforementioned flexibility brought about by the baked thin films of bread and the cavities is present, the inserted filling material does not overflow from the bore formed by the nozzle. Therefore, relatively large pieces of solid food material can be introduced into almost the whole volume of the bread.

As the bore formed by the nozzle opens in an end face of the baked bread, the appearance of the finished bread is good. This appearance is also attributable to the shrinkage of the bore, as mentioned above. For instance, a pipe of an outside diameter of about 10 mm leaves a bore of an inside diameter of about 6 mm.

The present invention thus enables new and fresh baked bread, inside of which various kinds of food materials are entirely confined, to be provided, which finished bread products can be handled with ease and in good sanitary conditions.

Furthermore, automatic production of the filling-containing bread can readily be realized, if a quantitative feeder assembly is associated with the nozzle.

In addition, if a large sized pipe is used, through which solids can be extruded without any obstruction, the bread is not damaged and overflow of the filling material does not occur.

## Claims

1. A method of producing bread containing filling material, comprising the steps of producing bread from dough, inserting a pipe into said bread to make a bore along an axis of said bread and introducing filling material containing solid food into said bore of said bread through said pipe to thereby produce bread containing filling material, characterised by producing said bread by forming a laminated dough sheet including a plurality of layers of fats and oils between layers of dough, cutting said dough sheet to desired dimensions, winding up said cut dough sheet, and baking the wound sheet to thereby produce bread inside which a plurality of cavities are disposed in a spiral form about said axis.

2. A method as claimed in claim 1, wherein the said pipe is inserted into the bread nearly as far as the far end thereof, and the filling material is introduced as the pipe is withdrawn from the bread.

## Revendications

1. Procédé de production de pain contenant une garniture, comprenant les étapes consistant à produire un pain à partir d'une pâte, à insérer un tuyau dans ledit pain pour pratiquer un trou le long d'un axe dudit pain et à introduire une garniture à base d'un aliment solide dans le trou pratiqué dans ledit pain par passage à travers le tuyau pour produire ainsi un pain contenant une garniture, caractérisé en ce qu'il consiste à produire ledit pain par formation d'une feuille de pâte stratifiée comprenant plusieurs couches de matières grasses et d'huiles entre des couches de pâte, à couper ladite feuille de pâte aux dimensions désirées, à enrouler ladite feuille de pâte coupée et à cuire la feuille enroulée pour produire ainsi un pain à l'intérieur duquel plusieurs cavités sont disposées en spirale autour dudit axe.

2. Procédé suivant la revendication 1, dans lequel le tuyau est inséré dans le pain pratiquement jusqu'à l'extrémité distale de ce pain et la garniture est introduite lorsque le tuyau est enlevé du pain.

## Patentansprüche

1. Verfahren zur Herstellung von Füllmaterial enthaltendem Brot, umfassend die Schritte der Herstellung von Brot aus einem Teig, der Einführung eines Rohres in das Brot zur Erzeugung einer Bohrung entlang einer Achse des Brotes und der Einführung von ein festes Nahrungsmittel enthaltendem Füllmaterial in die Bohrung des Brotes durch das Rohr zur Herstellung von Füllmaterial enthaltendem Brot, gekennzeichnet durch die Herstellung dieses Brotes durch Bildung einer laminierten Teigbahn, die eine Mehrzahl von Schichten von Fetten und Ölen zwischen Schichten von Teig umfaßt, Schneiden der Teigbahn auf gewünschte Abmessungen, Einrollen der geschnittenen Teigbahn und Backen der eingerollten Teigbahn zur Herstellung von Brot, in welchem sich eine Mehrzahl von Hohlräumen spiralförmig um die Achse herum befindet.

2. Verfahren, wie in Anspruch 1 beansprucht, worin das Rohr in das Brot fast bis zu dessen anderem Ende eingeführt wird und das Füllmaterial eingefüllt wird, während das Rohr aus dem Brot zurückgezogen wird.

# FIG. I